# EUROPÄISCHE PATENTSCHRIFT

(11) **EP 2 303 483 B1**
(45) Veröffentlichungstag und Bekanntmachung des Hinweises auf die Patenterteilung: **11.05.2016**
(21) Anmeldenummer: 09769083.8
(22) Anmeldetag: 22.05.2009
(51) Int. Cl.: B21B 37/00, B21B 37/28, G05B 17/02, G05B 13/04, G06F 17/50

(54) **ERSTELLVERFAHREN FÜR MASCHINENCODE, DESSEN AUSFÜHRUNG EIN OPTIMIERTES WALZMODELL REALISIERT**
METHOD FOR ESTABLISHING A MACHINE CODE, THE EXECUTION OF WHICH GENERATES AN OPTIMIZED ROLLING MODEL
PROCÉDÉ DE PRODUCTION DE CODE MACHINE DONT L'EXÉCUTION FOURNIT UN MODÈLE DE LAMINAGE OPTIMISÉ

(30) Priorität: 25.06.2008 DE 102008030243
(43) Veröffentlichungstag der Anmeldung: 06.04.2011
(73) Patentinhaber: Primetals Technologies Germany GmbH, 91052 Erlangen (DE)
(72) Erfinder: KURZ, Matthias, 91052 Erlangen (DE); HAINKE, Marc, 91207 Lauf a.d. Pegnitz (DE)
(74) Vertreter: Metals@Linz
(86) Internationale Anmeldenummer: PCT/EP2009/056236
(87) Internationale Veröffentlichungsnummer: WO 2009/156234

(56) Entgegenhaltungen:
- DE-A1- 10 049 260
- DE-A1- 19 641 432
- DE-A1-102005 036 068

## Beschreibung

Die vorliegende Erfindung betrifft ein Erstellverfahren für von einem Rechner unmittelbar ausführbaren Maschinencode, dessen Ausführung durch den Rechner bewirkt, dass der Rechner ein Walzmodell implementiert und anhand des Walzmodells, eines innerhalb eines vorbestimmten Zustandsbereichs liegenden Zustands eines Walzguts und einer innerhalb eines vorbestimmten Einstellungsbereichs liegenden Gerüsteinstellung eine Ausgangsgröße ermittelt, die zumindest einen bei einem durch den Zustand des Walzguts und die Gerüsteinstellung definierten Walzvorgang in dem Walzgut auftretenden Materialfluss quantitativ beschreibt.

Die vorliegende Erfindung betrifft weiterhin ein Computerprogramm, das Maschinencode aufweist, der von einem Rechner unmittelbar ausführbar ist und dessen Ausführung durch den Rechner bewirkt, dass der Rechner ein derartiges Walzmodell implementiert und anhand des Walzmodells, des Zustands des Walzguts und der Gerüsteinstellung die Ausgangsgröße ermittelt.

Weiterhin betrifft die vorliegende Erfindung einen Datenträger, auf dem in maschinenlesbarer Form ein derartiges Computerprogramm gespeichert ist. Auch betrifft die vorliegende Erfindung einen Rechner, der mit einem derartigen Computerprogramm programmiert ist, so dass er im Betrieb das Computerprogramm ausführt.

Schließlich betrifft die vorliegende Erfindung eine Walzstraße mit mindestens einem Walzgerüst und einem als Steuereinrichtung einer Walzstraße ausgebildeten Rechner, wobei der Rechner das Computerprogramm online in Verbindung mit der Steuerung der Walzstraße ausführt und das mindestens eine Walzgerüst von dem Rechner gesteuert wird.

Derartige Gegenstände sind allgemein bekannt.

Zur technologischen Vorausberechnung von Walzvorgängen ist es erforderlich, die Walzvorgänge durch ein entsprechend genaues Modell zu simulieren. Derartige Modelle sind an sich bekannt. So werden zu Auslegungszwecken von Grobblech- und anderen Bandwalzstraßen und von Stabstahlstraßen beispielsweise hochgenaue Modelle verwendet. Diese Modelle arbeiten meist mit Ansatzfunktionen, die auf der Methode der finiten Elemente basieren. Mittels derartiger Modelle kann insbesondere der Materialfluss des Walzguts im Walzspalt gut modelliert werden. Dies gilt bei einem bandförmigen Walzgut sowohl für reine Flachstiche, bei denen die Dicke des bandförmigen Walzguts reduziert wird, als auch für eine Abfolge von Stauch- und Flachstichen, wobei in den Stauchstichen der Breitung des bandförmigen Walzguts entgegen gewirkt wird. Insbesondere können bei einer Abfolge von Stauch- und Flachstichen sowohl die bei Stauchstichen auftretende sogenannte Hundeknochenbildung als auch die bei Flachstichen auftretende sogenannten Ausbauchungsbildung und Einschnürungsbildung modelliert und quantitativ vorausberechnet werden. Auch können bei einer Folge von Flachstichen Profil und Planheit des bandförmigen Walzguts mit guter Genauigkeit vorausberechnet werden.

Finite-Element-Methoden arbeiten mit einer hohen Auflösung. Bei heute möglichen Rechnerleistungen werden für die Vorausberechnung mehrere Stunden benötigt. Für Onlineberechnungen, die nur wenige Sekunden dauern dürfen, sind diese Modelle ungeeignet. Im Rahmen von Onlineberechnungen werden daher empirische Modelle eingesetzt. Die empirischen Modelle sind jedoch ungeeignet, um beispielsweise bei bandförmigem Walzgut genaue Aussagen über die Bandform, das Bandprofil und die Bandplanheit zu liefern.

DE 10 2005 036 068 A1 offenbart die Erzeugung von Stützstellenfeldern ausgehend von einem Finite-Elemente-Modell.

Die Aufgabe der vorliegenden Erfindung besteht darin, Möglichkeiten zu schaffen, mittels derer auf einfachere Weise als im Stand der Technik der bei einem Walzvorgang auftretende Materialfluss quantitativ modelliert werden kann.

Die Aufgabe wird verfahrenstechnisch durch ein Erstellverfahren mit den Merkmalen des Anspruchs 1 gelöst. Vorteilhafte Ausgestaltungen des Erstellverfahrens sind Gegenstand der abhängigen Ansprüche 2 bis 9.

Erfindungsgemäß wird einem auf mathematisch-physikalischen Gleichungen basierenden, universelle Ansatzfunktionen verwendenden Grundmodell eine Anzahl von innerhalb des gewünschten Zustandsbereichs liegenden Grundzuständen des Walzguts und eine Anzahl von innerhalb des Einstellungsbereichs liegenden Grundgerüsteinstellungen vorgegeben. Mittels des Grundmodells wird jeweils ein Ausgangszustand ermittelt. Jeder Ausgangszustand ist durch eine Anzahl von Wichtungsfaktoren beschrieben, die jeweils angeben, wie stark eine jeweils korrespondierende der universellen Ansatzfunktionen nach dem durch den jeweiligen Grundzustand des Walzguts und die jeweilige Grundgerüsteinstellung definierten Walzvorgang in dem Walzgut auftritt. Durch eine Analyse der Gesamtheit der ermittelten Ausgangszustände werden angepasste Ansatzfunktionen ermittelt. Die Anzahl an angepassten Ansatzfunktionen ist erheblich kleiner als die Anzahl an universellen Ansatzfunktionen. Unter Verwendung der angepassten Ansatzfunktionen wird das Walzmodell erstellt, wobei das Walzmodell auf den mathematisch-physikalischen Gleichungen basiert. Anhand des Walzmodells wird der Maschinencode erstellt.

Die vorliegende Erfindung beruht auf der Erkenntnis, dass bei Modellen, die auf den universellen Ansatzfunktionen (beispielsweise den bereits erwähnten finiten Elementen) basieren, ein Rechenaufwand erforderlich ist, der dem Problem nicht angepasst ist. Durch Verwendung der "richtigen" Ansatzfunktionen (d. h. der angepassten Ansatzfunktionen) kann dieser Rechenaufwand drastisch reduziert werden. Die Verfahrensschritte des Anspruchs 1 liefern diese Ansatzfunktionen. Die Erstellung des Modells erfolgt sodann, ausgehend von den ermittelten angepassten Ansatzfunktionen, in an sich bekannter Weise.

Es ist möglich die Gesamtheit der ermittelten Ausgangzustände "intellektuell" zu analysieren und "intellektuell" zu entscheiden, wie die angepassten Ansatzfunktionen gestaltet sein sollen. Diese Vorgehensweise liefert in der Regel zwar brauchbare, jedoch suboptimale Ergebnisse. Besser ist es daher, dass die Analyse der Gesamtheit der ermittelten Ausgangszustände eine Singulärwertzerlegung ist. Der Begriff "Singulärwertzerlegung" hat für Fachleute eine feststehende Bedeutung.

Die Singulärwertzerlegung ist zwar möglich. Bevorzugt ist es jedoch, dass anhand der Gesamtheit der ermittelten Ausgangszustände eine quadratische Matrix ermittelt wird und die angepassten Ansatzfunktionen mit einem Teil der Eigenvektoren der quadratischen Matrix korrespondieren. Zum Ermitteln der quadratischen Matrix können beispielsweise die Wichtungsfaktoren je eines Ausgangszustands als Spaltenvektor geschrieben werden und die einzelnen Spaltenvektoren nebeneinander geschrieben werden. Dadurch ergibt sich eine Koeffizientenmatrix. Die Koeffizientenmatrix wird mit ihrer Transponierten multipliziert. Das Matrizenprodukt ergibt eine quadratische, symmetrische Matrix, deren Eigenvektoren sodann ermittelt werden können.

Es ist möglich, nur die Eigenvektoren zu ermitteln und sodann diejenigen Eigenvektoren "intellektuell" zu selektieren, die mit den angepassten Ansatzfunktionen korrespondieren sollen. In einer bevorzugten Ausgestaltung ist jedoch vorgesehen, dass die Eigenwerte der quadratischen, symmetrischen Matrix ermittelt werden. In diesem Fall korrespondieren die angepassten Ansatzfunktionen mit den den größten Eigenwerten zugeordneten Eigenvektoren.

Beispielsweise können die Eigenwerte der Größe nach sortiert werden (der größte zuerst, der kleinste zuletzt). In diesem Fall können beispielsweise die ersten n Eigenwerte herausgegriffen werden, beispielsweise 5, 10 oder 15 Eigenwerte. Auch können die ersten x Prozent der Eigenwerte herausgegriffen werden. Auch können alle Eigenwerte herausgegriffen werden, die größer als ein Schwellenwert sind. Der Schwellenwert kann alternativ als absoluter Wert oder als Bruchteil des größten Eigenwerts angegeben sein.

Es ist möglich, das Walzmodell derart zu erstellen, dass dem Walzmodell der Zustand bereits basierend auf den angepassten Ansatzfunktionen vorgegeben wird. Alternativ ist es möglich, dass das Walzmodell einen Vorblock und einen Hauptblock aufweist, dass im Vorblock der Zustand in Komponenten der angepassten Ansatzfunktionen transformiert wird und dass im Hauptblock anhand der Komponenten der angepassten Ansatzfunktionen und der Gerüsteinstellungen die Ausgangsgröße ermittelt wird. In diesem Fall wird selbstverständlich im Rahmen des Erstellverfahrens das Walzmodell entsprechend ermittelt.

Die Ausgangsgröße umfasst vorzugsweise eine Anzahl von Wichtungsfaktoren, die jeweils angeben, wie stark eine jeweils korrespondierende der angepassten Ansatzfunktionen in dem Walzgut nach dem durch den Zustand des Walzguts und die Gerüsteinstellung definierten Walzvorgang auftritt.

Das Grundmodell kann gegeben sein. Alternativ kann es im Rahmen des Erstellverfahrens erstellt werden.

*Das Walzgut kann prinzipiell beliebiger Natur sein. Beispielsweise kann es sich um ein bandförmiges Walzgut handeln. In diesem Fall kann insbesondere das Walzmodell den beim Einsatz von Kaliberwalzen eines Stauchgerüsts auftretenden Materialfluss quantitativ beschreiben.*

*Die vorliegende Erfindung betrifft weiterhin ein Computerprogramm, das Maschinencode aufweist, wie er durch ein Erstellverfahren der zuletzt beschriebenen Art erhalten wird.*

*Die vorliegende Erfindung betrifft weiterhin einen Datenträger, auf dem in maschinenlesbarer Form ein derartiges Computerprogramm gespeichert ist.*

Weiterhin betrifft die vorliegende Erfindung einen Rechner, der mit einem derartigen Computerprogramm programmiert ist, so dass er im Betrieb das Computerprogramm ausführt.

Es ist möglich, dass der Rechner offline arbeitet, also losgelöst von der Steuerung einer Walzstraße. Auf Grund der Verwendung der angepassten Ansatzfunktionen benötigt das Walzmodell jedoch nur einen recht geringen Rechenaufwand. Es ist daher schnell genug, dass der Rechner als Steuereinrichtung einer Walzstraße ausgebildet sein kann und das Computerprogramm online in Verbindung mit der Steuerung der Walzstraße ausführen kann. In diesem Fall betrifft die vorliegende Erfindung weiterhin eine Walzstraße mit mindestens einem Walzgerüst und einem derartigen Rechner, wobei das mindestens eine Walzgerüst von dem Rechner gesteuert wird.

Weitere Vorteile und Einzelheiten ergeben sich aus der nachfolgenden Beschreibung von Ausführungsbeispielen in Verbindung mit den Zeichnungen. Es zeigen in Prinzipdarstellung:
FIG 1 schematisch eine Walzstraße,
FIG 2 ein Ablaufdiagramm,
FIG 3 die Wirkungsweise des Walzmodells,
FIG 4 bis 6 mögliche Querschnitte eines bandförmigen Walzguts,
FIG 7 ein Ablaufdiagramm,
FIG 8 ein Blockschaltbild zur ergänzenden Erläuterung von
FIG 7,

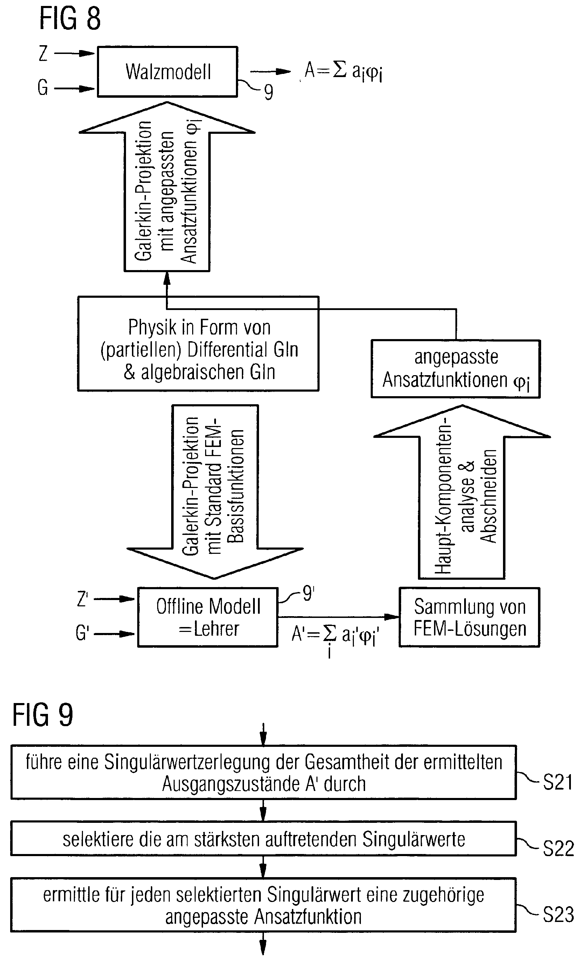

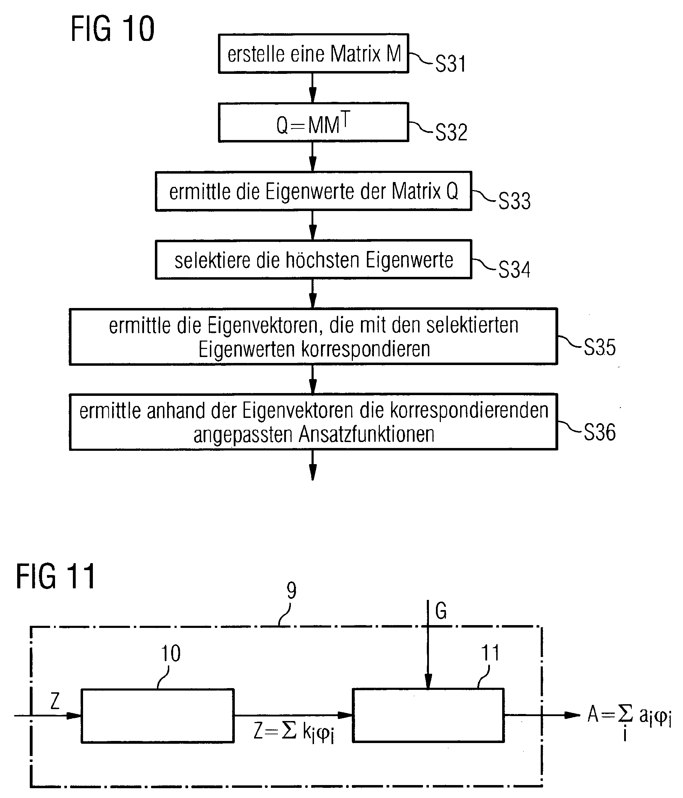

FIG 9 und 10 Ablaufdiagramme und
FIG 11 ein Blockschaltbild.

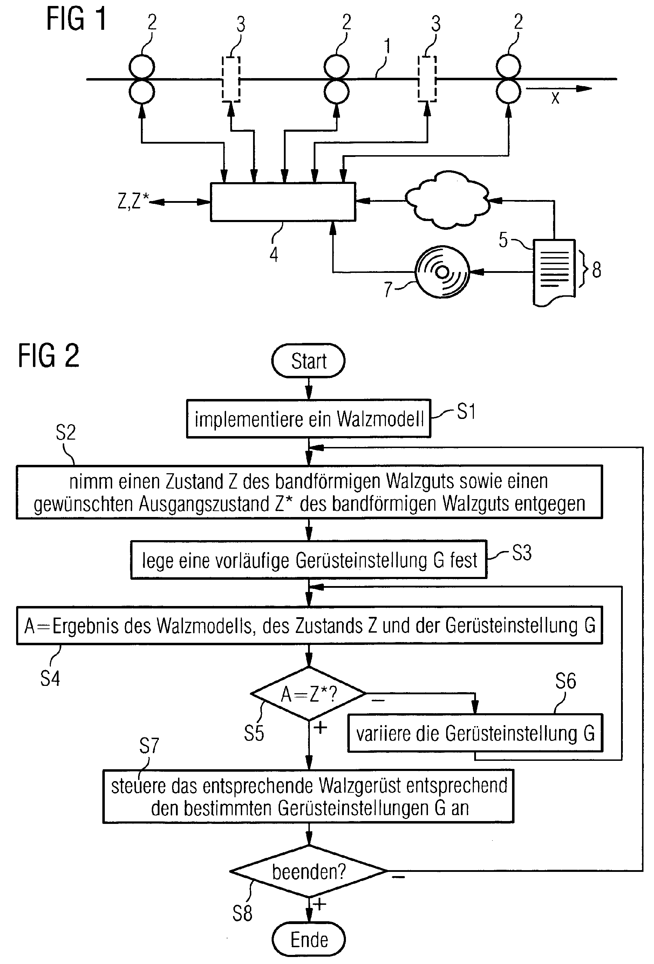

Gemäß FIG 1 weist eine Walzstraße zum Walzen eines Walzguts 1 eine Anzahl von Walzgerüsten 2, 3 auf. Gemäß FIG 1 ist hierbei das Walzgut 1 ein bandförmiges Walzgut 1. Die vorliegende Erfindung ist jedoch auch bei andersartigem Walzgut 1 anwendbar, beispielsweise bei stab- oder rohrförmigen Walzgut 1.

Mittels zumindest einiger der Walzgerüste 2, 3 - hier der Walzgerüste 2 - ist das bandförmige Walzgut 1 in Flachstichen walzbar. Die Walzgerüste 2, mittels derer das bandförmige Walzgut 1 in Flachstichen walzbar ist, müssen vorhanden sein. Je nach Auslegung der Walzstraße können weiterhin Stauchgerüste 3 - hier die Walzgerüste 3 - vorhanden sein, in denen das bandförmige Walzgut 1 Stauchstichen unterzogen wird. Die Stauchgerüste 3 können zu diesem Zweck Kaliberwalzen aufweisen. Die Stauchgerüste 3 sind nicht bei allen Walzstraßen vorhanden. Aus diesem Grund sind sie in FIG 1 nur gestrichelt eingezeichnet.

Die Walzstraße weist weiterhin einen Rechner 4 auf, der die Walzgerüste 2, 3 und auch die Walzstraße insgesamt steuert. Der Rechner 4 ist somit gemäß FIG 1 als Steuereinrichtung der Walzstraße ausgebildet.

Der Rechner 4 ist mit einem Computerprogramm 5 programmiert. Das Computerprogramm 5 kann dem Rechner 4 beispielsweise über eine Rechner-Rechner-Verbindung 6 (LAN, World Wide Web, ...) zugeführt worden sein. Alternativ ist es möglich, dass das Computerprogramm 5 in maschinenlesbarer Form auf einen Datenträger 7 gespeichert wird und sodann dem Rechner 4 über den Datenträger 7 zugeführt wird. Dargestellt ist in FIG 1 als Datenträger 7 eine CD-ROM. Der Datenträger 7 kann jedoch alternativ anders ausgebildet sein, beispielsweise als USB-Memorystick oder als SD-Speicherkarte.

Das Computerprogramm 5 weist Maschinencode 8 auf. Der Maschinencode 8 ist von dem Rechner 4 direkt und unmittelbar ausführbar. Er wird vom Rechner 4 im Betrieb ausgeführt. Der Betrieb des Rechners 4 wird nachstehend in Verbindung mit FIG 2 kurz erläutert.

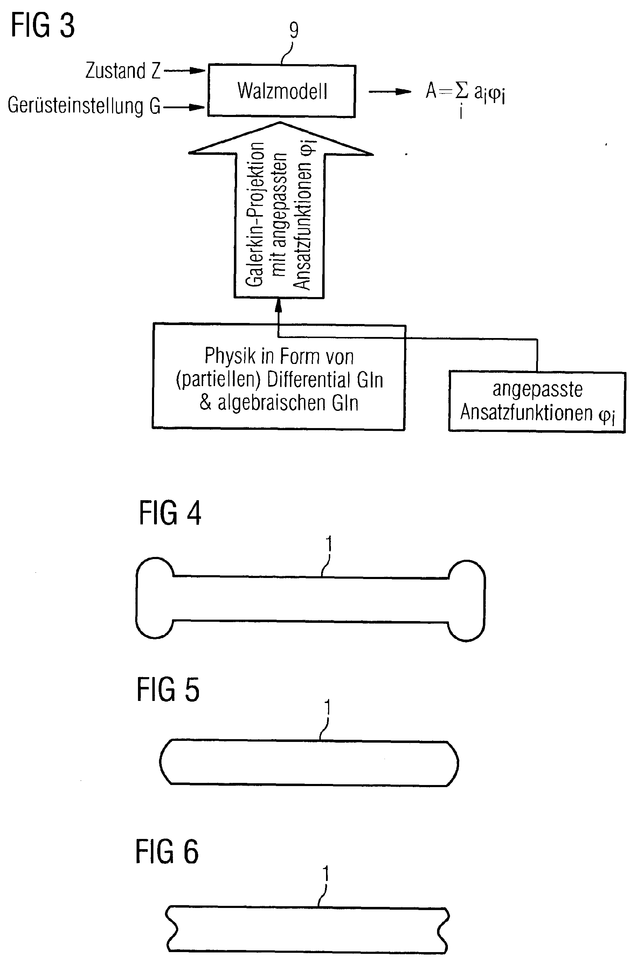

Gemäß FIG 2 implementiert der Rechner 4 zunächst in einem Schritt S1 ein Walzmodell 9 (siehe ergänzend FIG 3). In einem Schritt S2 nimmt der Rechner 4 einen Zustand Z des bandförmigen Walzguts 1 sowie einen gewünschten Ausgangszustand Z* des bandförmigen Walzguts 1 entgegen. Der Zustand Z bezieht sich auf den Zustand des bandförmigen Walzguts 1 vor dem Walzen, der gewünschte Ausgangszustand Z* auf den Zustand des bandförmigen Walzguts 1 nach dem Walzvorgang. Zumindest der Zustand Z liegt innerhalb eines vorbestimmten Zustandsbereichs. Vorzugsweise liegt auch der gewünschte Ausgangszustand Z* innerhalb des gewünschten Zustandsbereichs.

In einem Schritt S3 legt der Rechner 4 eine vorläufige Gerüsteinstellung G fest. Die Gerüsteinstellung G liegt innerhalb eines vorbestimmten Einstellungsbereichs eines modellierten Walzgerüsts 2, 3. Die Gerüsteinstellung G kann beispielsweise festlegen, ob es sich um einen Flachstich oder einen Stauchstich handelt und wie das den Stich bewirkende Walzgerüst 2, 3 eingestellt ist.

In einem Schritt S4 ermittelt der Rechner 4 anhand des Walzmodells 9, des Zustands Z und der Gerüsteinstellung G eine Ausgangsgröße A. Das Walzmodell 9 liefert also in Abhängigkeit von dem ihm vorgegebenen Zustand Z und der ihm vorgegebenen Gerüsteinstellung G die Ausgangsgröße A. Die Ausgangsgröße A weist in der Regel eine Anzahl von Wichtungsfaktoren a auf, welche angeben, wie stark eine dem jeweiligen Wichtungsfaktor a zugeordnete angepasste Ansatzfunktion ϕ nach dem Walzvorgang (wie er durch den jeweiligen Zustand Z des bandförmigen Walzguts 1 und die jeweilige Gerüsteinstellung G definiert ist) in dem bandförmigen Walzgut 1 auftritt. Die Ermittlung der Wichtungsfaktoren a kann beispielsweise unter Zuhilfenahme des Galerkin-Verfahrens erfolgen, das Fachleuten allgemein bekannt ist. Alternativ können die Wichtungsfaktoren a beispielsweise mittels eines Variationsansatzes ermittelt werden. Der guten Ordnung halber sei erwähnt, dass in FIG 3 (und auch an anderer Stelle) zusätzlich ein Index i verwendet wird, um anzudeuten, dass es sich um mehrere, jeweils voneinander verschiedene angepasste Ansatzfunktionen ϕ, Wichtungsfaktoren a usw. handelt. Die Ausgangsgröße A beschreibt quantitativ zumindest einen Materialfluss, der in dem bandförmigen Walzgut 1 bei einem Walzvorgang auftritt, wie er durch den Zustand Z und die Gerüsteinstellung G definiert ist. Gegebenenfalls kann die Ausgangsgröße A weitere Eigenschaften beschreiben. Zumindest die obenstehend erwähnte Eigenschaft wird jedoch quantitativ beschrieben.

In einem Schritt S5 prüft der Rechner 4, ob die ermittelte Ausgangsgröße A (innerhalb zulässiger Toleranzen) mit dem gewünschten Ausgangszustand Z* korrespondiert. Wenn dies nicht der Fall ist, geht der Rechner 4 zu einem Schritt S6 über, in dem er die Gerüsteinstellung G innerhalb des Einstellungsbereichs variiert. Vom Schritt S6 aus geht der Rechner 4 zum Schritt S4 zurück.

Wenn die ermittelte Ausgangsgröße A mit dem gewünschten Ausgangszustand Z* hinreichend übereinstimmt, geht der Rechner 4 zu einem Schritt S7 über. Im Schritt S7 steuert der Rechner 4 das entsprechende Walzgerüst 2, 3 entsprechend der zuletzt bestimmten Gerüsteinstellung G an.

Die Schritte S2 bis S7 werden auf Grund eines Schrittes S8 wiederholt durchlaufen, bis das Verfahren von FIG 2 beendet werden soll.

Bei der obenstehend in Verbindung mit FIG 2 beschriebenen Vorgehensweise führt der Rechner 4 das Computerprogramm 5 online in Verbindung mit der Steuerung der Walzstraße aus. Diese Vorgehensweise ist bevorzugt. Alternativ ist es möglich, dass der Rechner 4 nicht als Steuereinrichtung der Walzstraße ausgebildet ist und das Computerprogramm 5 offline ausführt. In diesem Fall kann beispielsweise der Schritt S7 durch einen nicht dargestellten Schritt ersetzt sein, in dem die jeweils ermittelte Ausgangsgröße A gespeichert wird oder an einen Anwender des Rechners 4 ausgegeben wird.

Das Walzmodell 9 ist gemäß FIG 3 derart ausgebildet, dass es auf mathematisch-physikalischen Gleichungen basiert. Die mathematisch-physikalischen Gleichungen können gemäß FIG 3 algebraische Gleichungen umfassen. Alternativ oder zusätzlich können die mathematisch-physikalischen Gleichungen gemäß FIG 3 (partielle) Differenzialgleichungen umfassen. Weiterhin werden gemäß FIG 3 im Rahmen des Walzmodells 9 angepasste Ansatzfunktionen ϕ verwendet, das heißt Ansatzfunktionen ϕ, welche auf die typischen Stiche des jeweiligen Walzgerüsts 2, 3 bzw. der Walzgerüste 2, 3 zugeschnitten sind.

In dem erläuterten Beispiel, bei dem das Walzgut 1 bandförmig ist, ist es möglich, dass der Einstellungsbereich für die Gerüsteinstellung G ausschließlich Flachstiche umfasst. Alternativ ist es in dem erläuterten Beispiel möglich, dass der Einstellungsbereich sowohl Flachstiche als auch Stauchstiche umfasst. In beiden Fällen umfasst der Materialfluss zumindest den Querfluss quer zur Walzrichtung x des bandförmigen Walzguts 1, also in Breitenrichtung des bandförmigen Walzguts 1. Vorzugsweise umfasst der Materialfluss auch den Längsfluss in Walzrichtung x.

Bei einer reinen Abfolge von Flachstichen sind mittels des Walzmodells 9 das Profil und/oder die Planheit des bandförmigen Walzguts 1 ermittelbar. Bei einer Folge von Stichen, bei denen Flachstiche und Stauchstiche alternieren, beschreiben die Ausgangsgrößen A des Walzmodells 9 sowohl eine sogenannte Hundeknochenbildung (siehe FIG 4) als auch eine Ausbauchungsbildung (siehe FIG 5) als auch eine Einschnürungsbildung (siehe FIG 6) des bandförmigen Walzguts 1 quantitativ. Der sogenannte Hundeknochen (dog bone) kann bei Stauchstichen auftreten, die Ausbauchung und die Einschnürung können bei Flachstichen auftreten.

Die Art und Weise des Erstellens des Walzmodells 9 ist prinzipiell beliebig. Entscheidend ist, dass das Walzmodell 9 auf den angepassten Ansatzfunktionen ϕ basiert. Aus diesem Grund ist es trotz Verwendung der mathematisch-physikalischen Gleichungen onlinefähig.

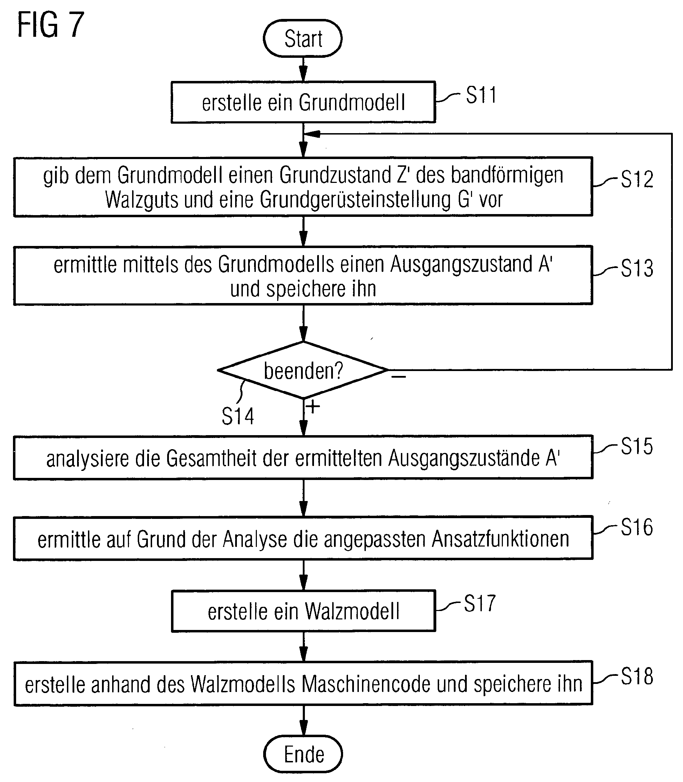

Nachfolgend wird in Verbindung mit den FIG 7 und 8 ein mögliches Erstellverfahren für das Walzmodell 9 näher erläutert.

Es sei jedoch nochmals darauf hingewiesen, dass dieses Erstellverfahren rein beispielhaft ist. Es begrenzt das Walzmodel 9 nur insofern, dass das Walzmodell 9 im Ergebnis die anhand der FIG 7 und 8 erläuterten Eigenschaften aufweisen muss. Ob das Walzmodell 9 auf die in den FIG 7 und 8 beschriebene Vorgehensweise erstellt wird oder nicht, ist hingegen irrelevant.

Gemäß FIG 7 wird zunächst in einem Schritt S11 ein Grundmodell 9' erstellt. Das Grundmodell 9' basiert gemäß FIG 8 auf denselben mathematisch-physikalischen Gleichungen wie das Walzmodell 9. Der Unterschied zum Walzmodell 9 besteht darin, dass zum Erstellen des Grundmodells 9' universelle Ansatzfunktionen ϕ' verwendet werden, das heißt Ansatzfunktionen ϕ', die nicht speziell auf die Beschreibung bestimmter Walzvorgänge zugeschnitten sind. Beispielsweise können die universellen Ansatzfunktionen ϕ' auf der Methode der finiten Elemente basieren. Zum Erstellen des Grundmodells 9' wird eine große Anzahl von universellen Ansatzfunktionen ϕ' benötigt (typischerweise mehrere 1000, in manchen Fällen über 10.000).

Das Grundmodell 9' muss nicht notwendigerweise im Rahmen des erfindungsgemäßen Erstellverfahrens erstellt werden. Es kann alternativ anderweitig gegeben sein. Teilweise sind geeignete Grundmodelle 9' sogar kommerziell erhältlich.

In einem Schritt S12 wird dem Grundmodell 9' ein Grundzustand Z' des bandförmigen Walzguts 1 vorgegeben. Weiterhin wird dem Grundmodell 9' im Rahmen des Schrittes S12 eine Grundgerüsteinstellung G' vorgegeben. Der Grundzustand Z' liegt innerhalb des vorbestimmten Zustandsbereichs. Die Grundgerüsteinstellung G' liegt innerhalb des vorbestimmten Einstellungsbereichs.

In einem Schritt S13 wird mittels des Grundmodells 9' jeweils ein Ausgangszustand A' ermittelt. Der Ausgangszustand A' ist gemäß FIG 8 durch eine Anzahl von Wichtungsfaktoren a' beschrieben. Die Wichtungsfaktoren a' geben jeweils an, wie stark eine dem jeweiligen Wichtungsfaktor a' zugeordnete universelle Ansatzfunktion ϕ' nach dem Walzvorgang (wie er durch den Grundzustand Z' und die Gerüsteinstellung G' definiert ist) in dem bandförmigen Walzgut 1 auftritt. Der ermittelte Ausgangszustand A' wird im Schritt S13 gespeichert. Die Wichtungsfaktoren a' können auf analoge Weise ermittelt werden wie die Wichtungsfaktoren a. Der Unterschied besteht darin, dass die Wichtungsfaktoren a' auf die universellen Ansatzfunktionen ϕ' bezogen sind, die Wichtungsfaktoren a auf die angepassten Ansatzfunktionen ϕ.

In einem Schritt S14 wird geprüft, ob die Ermittlung von Ausgangszuständen A' beendet werden soll. Wenn dies nicht der Fall ist, wird zum Schritt S12 zurückgegangen. Anderenfalls wird das Erstellverfahren mit einem Schritt S15 fortgesetzt.

Im Schritt S15 wird die Gesamtheit der ermittelten Ausgangszustände A' analysiert. Sodann werden in einem Schritt S16 auf Grund der Analyse des Schrittes S15 die angepassten Ansatzfunktionen ϕ ermittelt. Die Anzahl an angepassten Ansatzfunktionen ϕ ist erheblich kleiner als die Anzahl an universellen Ansatzfunktionen ϕ'. Sie liegt in aller Regel weit unter 100, beispielsweise unter 70, in manchen Fällen sogar unter 50.

In einem Schritt S17 wird das Walzmodell 9 erstellt. Das Erstellen des Walzmodells 9 erfolgt unter Verwendung der angepassten Ansatzfunktionen ϕ, die im Schritt S16 ermittelt wurden.

In einem Schritt S18 wird anhand des Walzmodells 9 der Maschinencode 8 erstellt, der von dem Rechner 4 unmittelbar ausführbar ist und dessen Ausführung die obenstehend beschriebene Betriebsweise des Rechners 4 bewirkt. Der Maschinencode 8, der in seiner Gesamtheit mit dem Computerprogramm 5 korrespondiert, wird sodann abgespeichert, beispielsweise auf dem Datenträger 7.

Zur Implementierung der Schritte S15 und S16 von FIG 7 ist es gemäß FIG 9 beispielsweise möglich, zunächst in einem Schritt S21 eine Singulärwertzerlegung der Gesamtheit der ermittelten Ausgangszustände A' durchzuführen und sodann in einem Schritt S22 die am stärksten auftretenden Singulärwerte zu selektieren. Der guten Ordnung halber sei erwähnt, dass selbstverständlich nicht nur ein einziger Singulärwert selektiert wird, sondern mehrere. Die Anzahl an selektierten Singulärwerten ist aber erheblich geringer als die Anzahl an universellen Ansatzfunktionen ϕ' (typischerweise maximal 100 im Vergleich zu mehreren 1000). Für jeden Singulärwert wird sodann in einem Schritt S23 eine zugehörige angepasste Ansatzfunktion ϕ ermittelt.

Alternativ ist es möglich, anhand der Gesamtheit der Ausgangszustände A' eine Hauptkomponentenanalyse vorzunehmen. In diesem Fall ist es bevorzugt, so vorzugehen, wie dies nachfolgend in Verbindung mit FIG 10 näher erläutert wird.

Gemäß FIG 10 wird zunächst in einem Schritt S31 eine Matrix M erstellt. Beispielsweise können die Wichtungsfaktoren a' jedes ermittelten Ausgangszustands A' jeweils eine Spalte der Matrix M bilden. Hierbei ist es möglich, die Ausgangszustände A' so wie sie sind als Spalten der Matrix M anzusetzen. Vorzugsweise stellt die so ermittelte Matrix - nachfolgend Zustandsmatrix genannt - jedoch noch nicht die Matrix M dar. Denn vorzugsweise wird für jede Zeile der Zustandsmatrix der Mittelwert der jeweiligen Zeile ermittelt. Der Mittelwert wird sodann von den Matrixelementen der jeweiligen Zeile subtrahiert. Die so ermittelte, zeilenweise modifizierte Matrix bildet die im Schritt S31 erstellte Matrix M.

In einem Schritt S32 wird die Matrix M mit ihrer Transponierten M^{T} multipliziert. Das auf diese Weise ermittelte Matrizenprodukt ergibt eine quadratische, symmetrische Matrix Q.

In einem Schritt S33 werden die Eigenwerte der quadratischen, symmetrischen Matrix Q ermittelt. In einem Schritt S34 werden die höchsten Eigenwerte selektiert. Die Grenze, bis zu der die Eigenwerte selektiert werden, kann auf verschiedene Weise vorgegeben sein. Beispielsweise ist es möglich eine absolute Anzahl an Eigenwerten vorzugeben. Alternativ ist es möglich, einen Prozentsatz der Eigenwerte vorzugeben. Ebenso ist es möglich, einen absoluten Wert vorzugeben und alle Eigenwerte zu selektieren, die größer oder größer/gleich als dieser Wert sind. Auch ist es möglich, alle Eigenwerte durch den größten Eigenwert zu dividieren und alle Eigenwerte zu selektieren, bei denen der Quotient mit dem größten Eigenwert größer oder größer/gleich einer vorbestimmten Schranke ist.

In einem Schritt S35 werden die Eigenvektoren ermittelt, die mit den im Schritt S34 selektierten Eigenwerten korrespondieren. In einem Schritt S36 werden anhand der Eigenvektoren der quadratischen Matrix Q die korrespondierenden angepassten Ansatzfunktionen ϕ ermittelt. Falls entsprechend der bevorzugten Vorgehensweise im Rahmen des Schrittes S31 die Mittelwerte von den Matrixelementen subtrahiert werden, werden im Rahmen des Schrittes S36 die Mittelwerte zu den einzelnen Komponenten der Eigenvektoren hinzu addiert.

Die obenstehend erläuterte Vorgehensweise ist als solche Fachleuten bekannt. Weitergehende Ausführungen hierzu sind daher nicht erforderlich.

Wie bereits erwähnt, arbeitet das Walzmodell 9 mit den angepassten Ansatzfunktionen ϕ. Hierbei ist es möglich, den Zustand Z im Rahmen der Schritte der FIG 2 bzw. der Darstellung von FIG 3 bereits in einer entsprechend angepassten Form vorzugeben. Alternativ ist es gemäß FIG 11 möglich, dass das Walzmodell 9 einen Vorblock 10 und einen Hauptblock 11 aufweist. In diesem Fall wird im Vorblock 10 der Zustand Z in Komponenten k der angepassten Ansatzfunktionen ϕ transformiert. Im Hauptblock 11 wird anhand der Komponenten k der angepassten Ansatzfunktionen ϕ und der Gerüsteinstellungen G die Ausgangsgröße A ermittelt. Selbstverständlich wird in diesem Fall das Walzmodell 9 im Rahmen der Vorgehensweise der FIG 7 bis 10 entsprechend erstellt.

Die vorliegende Erfindung weist viele Vorteile auf. Insbesondere ist die Qualität des Walzmodells 9 fast genauso hoch wie die des Grundmodells 9' (das typischerweise auf der Methode der finiten Elemente basiert). Der Rechenaufwand zur Ermittlung der Ausgangsgröße A ist hingegen drastisch reduziert, da - im Vergleich zum Grundmodell 9' - nur einige wenige Ansatzfunktionen ϕ verwendet werden. Auf Grund dieses Umstands ist das Walzmodell 9 insbesondere onlinetauglich.

Die in den Ausführungsbeispielen erläuterten Maßnahmen sind auch bei einem nicht bandförmigen Walzgut 1 anwendbar.

## Patentansprüche

1. Erstellverfahren für von einem Rechner (4) unmittelbar ausführbaren Maschinencode (8), dessen Ausführung durch den Rechner (4) bewirkt, dass der Rechner (4) ein auf mathematisch-physikalischen Gleichungen basierendes Walzmodell (9) implementiert und anhand des Walzmodells (9), eines innerhalb eines vorbestimmten Zustandsbereichs liegenden Zustands (Z) des Walzguts (1) und einer innerhalb eines vorbestimmten Einstellungsbereichs liegenden Gerüsteinstellung (G) eine Ausgangsgröße (A) ermittelt, die zumindest einen bei einem durch den Zustand (Z) des Walzguts (1) und die Gerüsteinstellung (G) definierten Walzvorgang in dem Walzgut (1) auftretenden Materialfluss quantitativ beschreibt,
- wobei einem auf den mathematisch-physikalischen Gleichungen basierenden, universelle Ansatzfunktionen (ϕ') verwendenden Grundmodell (9') eine Anzahl von innerhalb des Zustandsbereichs liegenden Grundzuständen (Z') des Walzguts (1) und eine Anzahl von innerhalb des Einstellungsbereichs liegenden Grundgerüsteinstellungen (G') vorgegeben werden und mittels des Grundmodells (9') jeweils ein Ausgangszustand (A') ermittelt wird,
- wobei jeder Ausgangszustand (A') durch eine Anzahl von Wichtungsfaktoren (a') beschrieben ist, die jeweils angeben, wie stark eine jeweils korrespondierende der universellen Ansatzfunktionen (ϕ') nach dem durch den jeweiligen Grundzustand (Z') des Walzguts (1) und die jeweilige Grundgerüsteinstellung (G') definierten Walzvorgang in dem Walzgut (1) auftritt,
- wobei durch eine Analyse der Gesamtheit der ermittelten Ausgangszustände (A') angepasste Ansatzfunktionen (ϕ) ermittelt werden,
- wobei die Anzahl an angepassten Ansatzfunktionen (ϕ) erheblich kleiner als die Anzahl an universellen Ansatzfunktionen (ϕ') ist,
- wobei unter Verwendung der angepassten Ansatzfunktionen (ϕ) das Walzmodell (9) erstellt wird und
- wobei anhand des Walzmodells (9) der Maschinencode (8) erstellt wird.

2. Erstellverfahren nach Anspruch 1,
**dadurch gekennzeichnet, dass** die Analyse der Gesamtheit der ermittelten Ausgangszustände (A') eine Singulärwertzerlegung ist.

3. Erstellverfahren nach Anspruch 1,
**dadurch gekennzeichnet, dass** anhand der Gesamtheit der ermittelten Ausgangszustände (A') eine quadratische, symmetrische Matrix (Q) ermittelt wird und dass die angepassten Ansatzfunktionen (ϕ) mit einem Teil der Eigenvektoren der quadratischen, symmetrischen Matrix (Q) korrespondieren.

4. Erstellverfahren nach Anspruch 3,
**dadurch gekennzeichnet, dass** die Eigenwerte der quadratischen, symmetrischen Matrix (Q) ermittelt werden und dass die angepassten Ansatzfunktionen (ϕ) mit den den größten Eigenwerten zugeordneten Eigenvektoren korrespondieren.

5. Erstellverfahren nach einem der obigen Ansprüche,
**dadurch gekennzeichnet, dass** das Walzmodell (9) einen Vorblock (10) und einen Hauptblock (11) aufweist, dass im Vorblock (10) der Zustand (Z) in Komponenten (k) der angepassten Ansatzfunktionen (ϕ) transformiert wird und dass im Hauptblock (11) anhand der Komponenten (k) der angepassten Ansatzfunktionen (ϕ) und der Gerüsteinstellungen (G) die Ausgangsgröße (A) ermittelt wird.

6. Erstellverfahren nach einem der obigen Ansprüche,
**dadurch gekennzeichnet, dass** die Ausgangsgröße (A) eine Anzahl von Wichtungsfaktoren (a) umfasst, die jeweils angeben, wie stark eine jeweils korrespondierende der angepassten Ansatzfunktionen (ϕ) in dem Walzgut (1) nach dem durch den Zustand (Z) des Walzguts (1) und die Gerüsteinstellung (G) definierten Walzvorgang auftritt.

7. Erstellverfahren nach einem der obigen Ansprüche,
**dadurch gekennzeichnet, dass** das Grundmodell (9') im Rahmen des Erstellverfahrens erstellt wird.

8. Erstellverfahren nach einem der obigen Ansprüche,
**dadurch gekennzeichnet, dass** das Walzgut (1) ein bandförmiges Walzgut (1) ist.

9. Erstellverfahren nach Anspruch 8,
**dadurch gekennzeichnet, dass** das Walzmodell (9) den beim Einsatz von Kaliberwalzen eines Stauchgerüsts (3) auftretenden Materialfluss quantitativ beschreibt.

10. Computerprogramm, das Maschinencode (8) aufweist, der durch ein Erstellverfahren nach einem der obigen Ansprüche erhalten wird.

11. Datenträger, auf dem in maschinenlesbarer Form ein Computerprogramm (5) nach Anspruch 10 gespeichert ist.

12. Rechner, der mit einem Computerprogramm (5) nach Anspruch 10 programmiert ist, so dass er im Betrieb das Computerprogramm (5) ausführt.

13. Rechner nach Anspruch 12,
**dadurch gekennzeichnet, dass** der Rechner als Steuereinrichtung einer Walzstraße ausgebildet ist und das Computerprogramm (5) online in Verbindung mit der Steuerung der Walzstraße ausführt.

14. Walzstraße mit mindestens einem Walzgerüst (2, 3) und einem Rechner (4) nach Anspruch 13, wobei das mindestens eine Walzgerüst (2, 3) von dem Rechner (4) gesteuert wird.

## Claims

1. Method for establishing machine code (8) which can be executed directly by a computer (4) and the execution of which by the computer (4) causes the computer (4) to implement a rolling model (9) based on mathematical/physical equations and to determine an output variable (A) which quantitatively describes at least one material flow occurring in the rolling stock (1) during a rolling process defined by the condition (Z) of the rolling stock (1) and the stand setting (G), said output variable being determined on the basis of the rolling model (9), a condition (Z) of the rolling stock (1) lying within a predetermined range of conditions and a stand setting (G) lying within a predetermined range of settings,
- a number of basic conditions (Z') of the rolling stock (1) lying within the range of conditions and a number of basic stand settings (G') lying within the range of settings being predefined for a basic model (9') which is based on the mathematical/physical equations and uses universal formulation functions (ϕ'), and an output condition (A') respectively being determined using the basic model (9'),
- each output condition (A') being described by a number of weighting factors (a') which each specify the extent to which a respective corresponding formulation function of the universal formulation functions (ϕ') occurs in the rolling stock (1) following the rolling process defined by the respective basic condition (Z') of the rolling stock (1) and the respective basic stand setting (G'),
- adapted formulation functions (ϕ) being determined by analyzing all of the output conditions (A') determined,
- the number of adapted formulation functions (ϕ) being considerably smaller than the number of universal formulation functions (ϕ'),
- the rolling model (9) being established using the adapted formulation functions (ϕ), and
- the machine code (8) being established on the basis of the rolling model (9).

2. Establishing method according to Claim 1,
**characterized in that** the analysis of all of the output conditions (A') determined is a singular value decomposition.

3. Establishing method according to Claim 1,
**characterized in that** a quadratic, symmetrical matrix (Q) is determined on the basis of all of the output conditions (A') determined, and **in that** the adapted formulation functions (ϕ) correspond to some of the eigenvectors of the quadratic, symmetrical matrix (Q).

4. Establishing method according to Claim 3,
**characterized in that** the eigenvalues of the quadratic, symmetrical matrix (Q) are determined, and **in that** the adapted formulation functions (ϕ) correspond to the eigenvectors associated with the largest eigenvalues.

5. Establishing method according to one of the preceding claims,
**characterized in that** the rolling model (9) has an advance block (10) and a main block (11), **in that** the condition (Z) is transformed into components (k) of the adapted formulation functions (ϕ) in the advance block (10), and **in that** the output variable (A) is determined in the main block (11) on the basis of the components (k) of the adapted formulation functions (ϕ) and the stand settings (G).

6. Establishing method according to one of the preceding claims,
**characterized in that** the output variable (A) comprises a number of weighting factors (a) which each specify the extent to which a respective corresponding formulation function of the adapted formulation functions (ϕ) occurs in the rolling stock (1) following the rolling process defined by the condition (Z) of the rolling stock (1) and the stand setting (G).

7. Establishing method according to one of the preceding claims,
**characterized in that** the basic model (9') is established during the establishing method.

8. Establishing method according to one of the preceding claims,
**characterized in that** the rolling stock (1) is strip-shaped rolling stock (1).

9. Establishing method according to Claim 8,
**characterized in that** the rolling model (9) quantitatively describes the material flow occurring when calibration rolls of an edger (3) are used.

10. Computer program having machine code (8) obtained by an establishing method according to one of the preceding claims.

11. Data storage medium which stores a computer program (5) according to Claim 10 in machine-readable form.

12. Computer which is programmed using a computer program (5) according to Claim 10, such that the computer executes the computer program (5) during operation.

13. Computer according to Claim 12,
**characterized in that** the computer is in the form of a control device for a rolling mill train and executes the computer program (5) online in conjunction with the control of the rolling mill train.

14. Rolling mill train having at least one rolling stand (2, 3) and a computer (4) according to Claim 13, the at least one rolling stand (2, 3) being controlled by the computer (4).

## Revendications

1. Procédé de création de code machine (8) exécutable directement par un ordinateur (4), l'exécution du code par le biais de l'ordinateur (4) a pour effet que l'ordinateur (4) met en oeuvre un modèle de laminage (9) se basant sur des équations mathématiques et physiques et détermine à l'aide du modèle de laminage (9), d'un état (Z) du matériau à laminer (1) au sein d'une plage d'états prédéfinie et d'un réglage de structure (G) au sein d'une plage de réglage prédéfinie une grandeur de sortie (A) qui décrit de manière quantitative un flux de matériau généré dans le produit à laminer (1) lors d'un processus de laminage défini par le biais de l'état (Z) du produit à laminer (1) et le réglage de structure (G),
- dans lequel à partir d'un modèle de base (9') utilisant des fonctions d'évaluation universelles (ϕ') se basant sur les équations mathématiques et physiques une pluralité d'états de base (Z') du produit à laminer (1) au sein de la plage d'états et une pluralité de réglages de structure de base (G') au sein de la plage de réglage sont prédéfinies et au moyen du modèle de base (9') est respectivement déterminé un état initial (A'),
- dans lequel chaque état initial (A') est décrit par le biais d'une pluralité de facteurs de pondération (a') qui indiquent à chaque fois à quelle puissance intervient une fonction correspondante respective des fonctions d'évaluation universelles (ϕ') dans le produit à laminer (1) après le processus de laminage défini par le biais de l'état de base (Z') respectif du produit à laminer (1) et du réglage de structure de base (G') respectif,
- dans lequel par le biais d'une analyse de l'ensemble des états initiaux (A') déterminés des fonctions d'évaluation adaptées (ϕ) sont déterminées,
- dans lequel la pluralité de fonctions d'évaluation adaptées (ϕ) est considérablement plus petite que la pluralité de fonctions d'évaluation universelles (ϕ'),
- dans lequel en utilisant les fonctions d'évaluation adaptées (ϕ) le modèle de laminage (9) est créé et
- dans lequel à l'aide du modèle de laminage (9) le code machine (8) est créé.

2. Procédé de fabrication selon la revendication 1,
**caractérisé en ce que** l'analyse de l'ensemble des états initiaux (A') déterminés est une décomposition de valeurs singulières.

3. Procédé de fabrication selon la revendication 1,
**caractérisé en ce que**, à l'aide de l'ensemble des états initiaux (A') déterminés une matrice symétrique quadratique (Q) est déterminée et **en ce que** les fonctions d'évaluation adaptées (ϕ) correspondent à une partie des vecteurs propres de la matrice symétrique quadratique (Q).

4. Procédé de fabrication selon la revendication 3,
**caractérisé en ce que** les valeurs propres de la matrice quadratique symétrique (Q) sont déterminées et **en ce que** les fonctions d'évaluation adaptées (ϕ) correspondent aux vecteurs propres associés aux plus grandes valeurs propres.

5. Procédé de fabrication selon l'une des revendications précédentes,
**caractérisé en ce que** le modèle de laminage (9) présente un bloc préalable (10) et un bloc principal (11), **en ce que** dans le bloc préalable (10) l'état (Z) est transformé en composants (k) des fonctions d'évaluation adaptées (ϕ) et **en ce que** dans le bloc principal (11) à l'aide des composants (k) des fonctions d'évaluation adaptées (ϕ) et des réglages de structure (G) la grandeur de sortie (A) est déterminée.

6. Procédé de fabrication selon l'une des revendications précédentes,
**caractérisé en ce que** la grandeur de sortie (A) comprend une pluralité de facteurs de pondération (a) qui indiquent à chaque fois à quelle puissance intervient une des fonctions correspondante respective des fonctions d'évaluation adaptées (ϕ) dans le produit à laminer (1) après le processus de laminage défini par le biais de l'état (Z) du produit à laminer (1) et le réglage de structure (G).

7. Procédé de fabrication selon l'une des revendications précédentes,
**caractérisé en ce que** le modèle de base (9') est créé dans le cadre du procédé de fabrication.

8. Procédé de fabrication selon l'une des revendications précédentes,
**caractérisé en ce que** le produit à laminer (1) est un produit à laminer (1) en forme de bande.

9. Procédé de fabrication selon la revendication 8,
**caractérisé en ce que** le modèle de laminage (9) décrit de manière quantitative le flux de matériau généré lors de la mise en oeuvre de cylindres d'étalonnage d'une cage à refouler (3) .

10. Programme informatique qui présente le code machine (8) qui est obtenu par le biais d'un procédé de fabrication selon l'une des revendications précédentes.

11. Support de données sur lequel est stocké sous une forme lisible par une machine un programme informatique (5) selon la revendication 10.

12. Ordinateur qui est programmé avec un programme informatique (5) selon la revendication 10 de sorte qu'il exécute, lorsqu'il fonctionne, le programme informatique (5).

13. Ordinateur selon la revendication 12,
**caractérisé en ce que** l'ordinateur est configuré en tant que dispositif de commande d'un train de laminoir et exécute le programme informatique (5) en ligne en relation avec la commande du train de laminoir.

14. Train de laminoir avec au moins une cage de laminoir (2, 3) et un ordinateur (4) selon la revendication 13, dans lequel l'au moins une cage de laminoir (2, 3) est commandée par l'ordinateur (4).
